# EUROPÄISCHE PATENTANMELDUNG

(11) **EP 2 246 203 A1**
(43) Veröffentlichungstag der Anmeldung: **03.11.2010**
(21) Anmeldenummer: 09158862.4
(22) Anmeldetag: 27.04.2009
(51) Int. Cl.: B60D 1/02, B60D 1/36

(54) **Fangmaul mit Prallschutz**

(71) Anmelder: Jost-Werke GmbH, 63263 Neu-Isenburg (DE)
(72) Erfinder: Szczepanek, Udo, 82223 Eichenau (DE)
(74) Vertreter: Trossin, Hans-Jürgen

(57) **Zusammenfassung**

Ein Fangmaul für eine zur Ankupplung eines Nachlauffahrzeugs an ein Zugfahrzeug ausgebildete Kraftfahrzeugkupplung, wobei das Fangmaul (310) hierzu wenigstens einen im Kupplungsteil-Einfahrbereich vorgesehenen, im Wesentlichen starren Einfahr-Unterstützungswandabschnitt (318,320,322,324) mit einer Einfahr-Unterstützungsfläche (326,328,330,332) auf der Kupplungsseite aufweist, welche bezogen auf eine den Kupplungsteil-Aufnahmebereich (314) durchsetzende und in Fahrzeuglängsrichtung (L) verlaufende Bezugsachse (B) derart geneigt ist, dass ein Normalenvektor der Einfahr-Unterstützungsfläche (326,328,330,332) eine von dem das Fangmaul (310) tragenden Fahrzeug weg weisende, in Richtung der Bezugsachse (B) verlaufende axiale erste Komponente und eine zur Bezugsachse (B) hinweisende, zur ersten orthogonale zweite Komponente aufweist, wobei die Einfahr-Unterstützungsfläche (326,330) unter Zwischenanordnung eines Federbauteils (356,358) mit Abstand von dem Einfahr-Unterstützungswandabschnitt (318,322) derart angeordnet ist, dass die Einfahr-Unterstützungsfläche (326,330) unter Krafteinwirkung an der Kupplungsseite (312) mit einer in Richtung auf den Einfahr-Unterstützungswandabschnitt (318,322) zu wirkenden Kraft gegen eine Verformung des Federbauteils (356,358) zumindest abschnittsweise elastisch auf den Einfahr-Unterstützungswandabschnitt (318,322) zu verlagerbar ist.

## Beschreibung

Die vorliegende Anmeldung betrifft ein Fangmaul für eine zur Ankupplung eines Nachlauffahrzeugs an ein Zugfahrzeug ausgebildete Kraftfahrzeugkupplung, in einem an ein Fahrzeug aus Zugfahrzeug und Nachlauffahrzeug montierten Zustand betrachtet, mit einer Montageseite, welche zu dem das Fangmaul tragenden Fahrzeug hin weist, und mit einer der Montageseite entgegengesetzten Kupplungsseite, welche von dem das Fangmaul tragenden Fahrzeug weg weist, wobei das Fangmaul einen Kupplungsteil-Aufnahmebereich umfasst, in welchem dann, wenn ein an das jeweils andere Fahrzeug aus Nachlauffahrzeug und Zugfahrzeug montiertes Kupplungsteil mit seinem Kupplungsabschnitt lösbar an die Kraftfahrzeugkupplung angekuppelt ist, ein Abschnitt des Kupplungsteils aufgenommen ist, und wobei das Fangmaul einen außerhalb des Kupplungsteil-Aufnahmebereichs gelegenen Kupplungsteil-Einfahrbereich aufweist, welcher dazu vorgesehen ist, Kupplungsabschnitte von Kupplungsteilen, welche sich dem Fangmaul außerhalb des Kupplungsteil-Aufnahmebereichs auf der Kupplungsseite annähern, zum Kupplungsteil-Aufnahmebereich hin zu lenken, wobei das Fangmaul hierzu wenigstens einen im Kupplungsteil-Einfahrbereich vorgesehenen, im Wesentlichen starren Einfahr-Unterstützungswandabschnitt mit einer Einfahr-Unterstützungsfläche auf der Kupplungsseite aufweist, welche bezogen auf eine den Kupplungsteil-Aufnahmebereich durchsetzende und in Fahrzeuglängsrichtung verlaufende Bezugsachse derart geneigt ist, dass ein Normalenvektor der Einfahr-Unterstützungsfläche eine von dem das Fangmaul tragenden Fahrzeug weg weisende, in Richtung der Bezugsachse verlaufende axiale erste Komponente und eine zur Bezugsachse hinweisende, zur ersten orthogonale zweite Komponente aufweist.

Derartige Fangmäuler sind weit verbreitet an Lastkraftwagen im Gebrauch und erleichtern beim Ankuppeln von Nachlauffahrzeugen an das in der Regel die Kraftfahrzeugkupplung mit dem Fangmaul tragende Zugfahrzeug das Einfahren beispielsweise von Zugösen des Nachlauffahrzeugs in die Kraftfahrzeugkupplung.

Zur Erleichterung der Beschreibung des Fangmauls ist dieses in der vorliegenden Anwendung in einem an ein Fahrzeug aus Zugfahrzeug und Nachlauffahrzeug montierten Zustand beschrieben. Dadurch können charakteristische Größen und Merkmale des das Fangmaul tragenden Fahrzeugs, wie etwa dessen Längsachse, zur Beschreibung des Fangmauls herangezogen werden. Diese Beschreibung des Fangmauls unter Zuhilfenahme von Bezugsgrößen des das Fangmaul tragenden Fahrzeugs ist unproblematisch, da jeder Fachmann einem Fangmaul ohne Weiteres auf den ersten Blick ansieht, wie dieses am Fahrzeug anzubringen ist. Dies bedeutet, dass ein Durchschnittsfachmann für jedes Fangmaul erkennt, auch wenn dieses nicht an ein Fahrzeug montiert ist, wie es im montierten Zustand relativ zum Fahrzeug orientiert ist.

Im Falle von Zweifeln über die Orientierung eines Fangmauls am Fahrzeug soll für die vorliegende Anmeldung davon ausgegangen werden, dass mit "einem am Fahrzeug montierten Zustand des Fangmauls" ein Zustand gemeint ist, bei welchem ein Fangmaul zusammen mit einer Kraftfahrzeugkupplung an einem Längsende etwa in der Quermitte eines Fahrzeugs angeordnet ist.

Üblicherweise hat das aus dem Stand der Technik bekannte Fangmaul vier Einfahr-Unterstützungswandabschnitte mit jeweils einer Einfahr-Unterstützungsfläche, welche trichterartig um den Kupplungsteil-Aufnahmebereich angeordnet sind, um unabhängig von einer konkreten Fehlanordnung eines Kupplungsabschnitts des Kupplungsteils außerhalb des Kupplungsteil-Aufnahmebereichs, den Kupplungsabschnitt beim Ankuppeln des Nachlauffahrzeugs an das Zugfahrzeug in den Kupplungsteil-Aufnahmebereich hineinzulenken.

Am Markt werden zwei unterschiedliche Typen von Nachlauffahrzeugen an Zugfahrzeuge angekuppelt:
Zum einen sind dies Deichsel-Nachlauffahrzeuge mit vertikal beweglicher Deichsel als dem Kupplungsteil, das mit einer um eine Hochachse (Gierachse) drehbaren Radachse des Nachlauffahrzeugs verbunden ist. Bei diesem Typ kann die Deichsel mit einer einstellbaren Haltefeder auf eine bestimmte Höhe eingestellt werden kann. Die in der bestimmten Höhe angeordnete Deichsel kann ausgehend von dieser Neutralstellung gegen die Haltefeder vertikal bewegt werden.

Den anderen Typ von Nachlauffahrzeug bilden sogenannte Zentralachs-Nachlauffahrzeuge, welche eine starre Deichsel aufweisen, die üblicherweise in einer Parkstellung auf einen Stützfuß aufgestützt ist.

Beim Ankoppelvorgang bewegt der Führer des Zugfahrzeugs das Zugfahrzeug üblicherweise so, dass der Kupplungsabschnitt des Kupplungsteils und die Kraftfahrzeugkupplung mit dem Fangmaul relativ aufeinander zu bewegt werden, bis der Kupplungsabschnitt des Kupplungsteils im zur Ankupplung vorgesehenen Ort angeordnet ist und die Ankupplung des Nachlauffahrzeugs an das Zugfahrzeug vollzogen werden kann.

Ein Problem kann beim Ankuppeln des Nachlauffahrzeugs an das Zugfahrzeug dann auftreten, wenn der Zugfahrzeugführer Handlungen vorzunehmen vergisst, welche eine Relativbeweglichkeit des Kupplungsabschnitts relativ zum Fangmaul und der Kraftfahrzeugkupplung sicherstellen sollen.

Dies liegt beispielsweise dann vor, wenn es der Zugfahrzeugführer unterlässt, die Vorderachse eines Deichsel-Nachlauffahrzeugs zu entbremsen, da dann, wenn der Kupplungsabschnitt beim Ankuppeln auf den Kupplungsteil-Einfahrbereich auftrifft, der Kupplungsabschnitt möglicherweise nach oben und unten, jedoch nur sehr schwer oder gar nicht seitlich ausweichen kann. In der Folge treten im weiteren Verlauf des Rangiervorgangs bei fortgesetzter Annäherungsbewegung von Kupplung und Kupplungsteil unerwünscht hohe Kräfte auf, die auf das Fangmaul einwirken.

Rangiert der Zugfahrzeugführer zusätzlich oder alternativ unvorsichtigerweise mit hohen Rangiergeschwindigkeiten, kann es zu hohen Auftreffgeschwindigkeiten des Kupplungsabschnitts auf den Kupplungsteil-Einfahrbereich des Fangmauls kommen. Die mit diesen hohen Auftreffgeschwindigkeiten verbundenen hohen Verzögerungen führen ebenso zu unerwünscht hohen Kräften, die auf das Fangmaul einwirken.

Durch diese hohen Kräfte können das Fangmaul oder/und mit dem Fangmaul formschlüssig zusammenwirkende Baugruppen, wie beispielsweise ein das Fangmaul in Mittelstellung feststellender Arretierbolzen und ein den Arretierbolzen führendes Automatikgehäuse und dergleichen, beschädigt werden.

Aufgabe der vorliegenden Erfindung ist es daher, ein eingangs dargestelltes Fangmaul derart weiterzubilden, dass das Fangmaul und damit kraft- und/oder formschlüssig zusammenwirkende Baugruppen im Falle eines unvorschriftsmäßigen oder/und unvorsichtigen Rangierens einer verringerten Beschädigungsgefahr ausgesetzt ist.

Diese Aufgabe wird erfindungsgemäß dadurch gelöst, dass die Einfahr-Unterstützungsfläche unter Zwischenanordnung eines Federbauteils mit Abstand von dem Einfahr-Unterstützungswandabschnitt derart angeordnet ist, dass die Einfahr-Unterstützungsfläche unter Krafteinwirkung an der Kupplungsseite mit einer in Richtung auf den Einfahr-Unterstützungswandabschnitt zu wirkenden Kraft zumindest abschnittsweise gegen eine Verformung des Federbauteils elastisch auf den Einfahr-Unterstützungswandabschnitt zu verlagerbar ist.

Durch die Anordnung der Einfahr-Unterstützungsfläche mit Abstand von dem Einfahr-Unterstützungswandabschnitt unter Zwischenanordnung eines Federbauteils wird ein durch diesen Abstand begrenzter Federweg vorgesehen, mit welchem die Einfahr-Unterstützungsfläche gegen eine aus der elastischen Verformung des Federbauteils resultierende Kraft dem Einfahr-Unterstützungswandabschnitt angenähert werden kann. Dies wird auch dadurch ermöglicht, dass die Einfahr-Unterstützungsfläche, anders als im Stand der Technik, gesondert von dem Einfahr-Unterstützungswandabschnitt ausgebildet ist.

Nähern sich also Fangmaul und Kupplungsabschnitt einander außermittig an und trifft der Kupplungsabschnitt deshalb auf die Einfahr-Unterstützungsfläche des Fangmauls auf, so wird zunächst das Federbauteil verformt, wodurch der durch das stoßartige Auftreffen des Kupplungsabschnitts auf die Einfahr-Unterstützungsfläche bewirkte zeitlich sehr kurze und betragsmäßig sehr große Kraftstoß an der Einfahr-Unterstützungsfläche in seiner Wirkung auf den Einfahr-Unterstützungswandabschnitt zu einer zeitlich länger wirkenden Aufpralllast wird, deren Maximalkraft jedoch verglichen mit dem Kraftstoß an der Einfahr-Unterstützungsfläche deutlich reduziert ist. Mit anderen Worten: Die an der Einfahr-Unterstützungsfläche stoßartig auftretende Aufprallkraft wird in ihrer Wirkung auf den mit Abstand von ihr angeordneten Einfahr-Unterstützungswandabschnitt gedämpft.

Damit ist nicht nur die im Falle eines derartigen Aufpralls auf das Fangmaul unmittelbar einwirkende Maximalkraft, sondern auch die auf die mit dem Fangmaul etwaig zusammenwirkenden Baugruppen einwirkende Maximalkraft reduziert.

Wenn in dieser Anmeldung von einem "im Wesentlichen starren Einfahr-Unterstützungswandabschnitt" die Rede ist, so ist damit gemeint, dass der Einfahr-Unterstützungswandabschnitt im Vergleich zum Federbauteil im Wesentlichen starr ist.

Grundsätzlich kann daran gedacht sein, dass die Einfahr-Unterstützungsfläche an dem Federbauteil selbst ausgebildet ist. Dann kann das Federbauteil abschnittsweise zumindest an der Auftreffstelle des Kupplungsabschnitts auf das Federbauteil unter Einwirkung der Aufprallkraft zum Einfahr-Unterstützungswandabschnitt hin verlagert werden. Es können jedoch noch weitaus größere Aufprallkräfte mit ein- und demselben Federbauteil gedämpft werden, wenn die Einfahr-Unterstützungsfläche an einem im Vergleich zum Federbauteil im Wesentlichen starren Prallbauteil ausgebildet ist, welches gesondert von dem Einfahr-Unterstützungswandabschnitt ausgebildet und relativ zu diesem unter Veränderung des Abstands zwischen Einfahr-Unterstützungsfläche und Einfahr-Unterstützungswandabschnitt beweglich am Einfahr-Unterstützungswandabschnitt vorgesehen ist.

Durch die Ausbildung der Einfahr-Unterstützungsfläche an dem im Wesentlichen starren Prallbauteil wird unabhängig vom Aufprallort des Kupplungsabschnitts auf die Einfahr-Unterstützungsfläche wegen seiner im Wesentlichen starren Ausbildung stets das gesamte Prallbauteil relativ zum Einfahr-Unterstützungswandabschnitt verlagert, wodurch es zu einer wesentlich stärkeren Verformung des zwischen Prallbauteil und Einfahr-Unterstützungswandabschnitt vorgesehenen Federbauteils kommen kann. Mit der größeren Verformung nimmt das Federbauteil eine größere Verformungsenergie auf, woraus die erhöhte Dämpfungswirkung erklärbar ist.

Für eine gezielte und dadurch effektive oder/und materialschonende Verformung des Federbauteils können Führungsmittel vorgesehen sein, welche das Prallbauteil in seiner den Abstand zwischen Einfahr-Unterstützungswandabschnitt und Einfahr-Unterstützungsfläche verändernden Relativbewegung führen. Besonders bevorzugt findet durch die Führungsmittel eine Führung des Prallbauteils orthogonal zur Einfahr-Unterstützungsfläche statt. Die Führungsmittel können mit dem Prallbauteil verbunden sein und den Einfahr-Unterstützungswandabschnitt auf der Montageseite hintergreifend durchsetzen, so dass sie und mit ihnen form- oder kraftschlüssig verbundene Bauteile auf einfache Weise unverlierbar an dem zugeordneten Einfahr-Unterstützungswandabschnitt angeordnet sind.

Um das Prallbauteil selbst unverlierbar am Einfahr-Unterstützungswandabschnitt des Fangmauls anordnen zu können, kann auch dieses einen Hintergriffsabschnitt aufweisen, mit welchem das Prallbauteil den Einfahr-Unterstützungswandabschnitt auf der Montageseite hintergreift.

Zur Verringerung der zur Herstellung einer derartigen bevorzugten Ausführungsform eines erfindungsgemäßen Fangmauls notwendigen Bauteileanzahl kann der Hintergriffsabschnitt einstückig mit dem Prallbauteil ausgebildet sein, etwa durch Schmieden oder/und Biegen des Prallbauteils. Der Hintergriffsabschnitt kann aus mehreren Teilabschnitten gebildet sein.

Zur weiteren Reduzierung der zur Herstellung des Fangmauls notwendigen Bauteileanzahl kann der Hintergriffsabschnitt als das zuvor genannte Führungsmittel den Einfahr-Unterstützungswandabschnitt durchsetzen. Dann kann das Prallbauteil besonders einfach formschlüssig unverlierbar unter gleichzeitig gewünschter Führung einer Relativbewegung von Prallbauteil und Einfahr-Unterstützungswandabschnitt an selbigem vorgesehen sein.

Das Prallbauteil mit einer oder mehreren daran vorgesehenen Einfahr-Unterstützungsflächen kann den Kupplungsteil-Aufnahmeabschnitt zumindest abschnittsweise, vorzugsweise vollständig umgeben, um eine möglichst große gedämpfte Auftrefffläche für das Kupplungsteil bereitzustellen.

Zur Erhöhung der Verformungshärte des Federbauteils, also der für eine vorbestimmte Verformung des Federbauteils notwendigen Kraft, kann das Federbauteil an zwei, vorzugsweise an drei Seiten vom Prallbauteil umgeben sein. In Weiterbildung dieses Gedankens kann das Federbauteil im Wesentlichen vollständig gekapselt sein, also im Wesentlichen vollständig von starren Flächen umgeben sein. "Im Wesentlichen vollständig gekapselt" soll dabei so verstanden werden, dass im Vergleich zu den Abmessungen des Federbauteils kleine Spalte oder Öffnungen unberücksichtigt bleiben sollen.

Die Kapselung kann beispielsweise an Vorder- und Rückseite des Federbauteils durch eine der Einfahr-Unterstützungsfläche entgegengesetzte Fläche des Prallbauteils sowie eine zum Prallbauteil hinweisende Fläche des Einfahr-Unterstützungswandabschnitts gebildet sein, kann an zwei zur Bezugsachse hin und von dieser weg weisenden Seitenflächen durch das Federbauteil umgreifende Flächen von Prallbauteil oder/und Einfahrunterstützungswandabschnitt gebildet sein, und kann an zwei zu benachbarten Einfahr-Unterstützungswandabschnitten hinweisenden Seitenflächen von diesen benachbarten Einfahr-Unterstützungswandabschnitten des Fangmauls gebildet sein. Vorzugsweise liegen die zuvor genannten Seitenflächen des Federbauteils einander paarweise gegenüber.

Damit das Fangmaul eine beliebige Fehlstellung des Kupplungsabschnitts außerhalb des Kupplungsteil-Aufnahmebereichs beim Rangieren Ausgleichen und den Kupplungsabschnitt in den Kupplungsteil-Aufnahmebereich ablenken kann, kann wie bereits beim Fangmaul des Standes der Technik vorgesehen sein, dass das Fangmaul eine Mehrzahl von in Umfangsrichtung um den Kupplungsteil-Aufnahmebereich aufeinander folgenden Einfahr-Unterstützungswandabschnitten aufweist.

In dem bevorzugten Fall einer Mehrzahl von am Fangmaul vorgesehenen Einfahr-Unterstützungswandabschnitten kann zur besseren Schonung des Fangmauls vorgesehen sein, dass an wenigstens zwei bezüglich der Bezugsachse gegenüberliegenden Einfahr-Unterstützungswandabschnitten jeweils eine Einfahr-Unterstützungsfläche unter Zwischenanordnung eines Federbauteils mit Abstand von dem jeweiligen Einfahr-Unterstützungsabschnitt angeordnet und elastisch auf den zugeordneten Einfahr-Unterstützungswandabschnitt zu verlagerbar ist.

Da, wie eingangs geschildert, vor allen Dingen eine seitliche Fehlstellung des Kupplungsabschnitts durch unbeabsichtigter Weise unterlassenes Entbremsen einer mit dem Kupplungsteil verbundenen Achse zu hoher Beschädigungsgefahr am Fangmaul führen kann, sind die wenigstens zwei unter Zwischenanordnung eines Federbauteils am Fangmaul vorgesehenen Einfahr-Unterstützungsflächen vorzugsweise - bei Betrachtung des Fangmauls in einem an ein Fahrzeug montierten Zustand - an im Wesentlichen horizontal gegenüberliegenden Einfahr-Unterstützungswandabschnitten vorgesehen.

Grundsätzlich kann jedes beliebige elastisch verformbare Federbauteil zum Einsatz kommen. Als besonders einfach und kostengünstig haben sich Elastomerbauteile als die Federbauteile erwiesen. Diese können insbesondere durch das zuvor genannte im Wesentlichen vollständige Kapseln mit einer für die erwarteten Aufprallkräfte ausreichenden Verformungssteifigkeit versehen werden.

Zur Erleichterung der Montage sowie zur Sicherstellung des korrekten Sitzes des Federbauteils über eine lange Betriebsdauer ist das Federbauteil vorzugsweise mit dem zugeordneten Einfahr-Unterstützungswandabschnitt verbunden, als Elastomerbauteil besonders bevorzugt an diesen anvulkanisiert.

Zusätzlich oder alternativ kann das aus einem Elastomerbauteil gebildete Federbauteil aus den gleichen oben genannten Gründen mit dem Prallbauteil verbunden, besonders bevorzugt durch Anvulkanisieren verbunden sein.

Zur erleichterten Montage des Fangmauls kann es eine, vorzugsweise vormontierte, Prallbauteilgruppe aufweisen, welche das im Wesentlichen starre Prallbauteil, eine im Wesentlichen starre Rückwand und ein zwischen diesen angeordnetes Elastomer-Federbauteil umfasst, wobei die Rückwand mit in Umfangsrichtung um den Kupplungsteil-Aufnahmebereich benachbarten Einfahr-Unterstützungswandabschnitten, vorzugsweise lösbar, verbunden ist und den dem Prallbauteil zugeordneten Einfahr-Unterstützungswandabschnitt bildet. Besonders bevorzugt sind dabei zur erleichterten Montage Prallbauteil, Elastomer-Federbauteil und Rückwand untereinander verbunden.

Diese Ausgestaltung des Fangmauls ermöglicht es, das Fangmaul im Gegensatz zum Stand der Technik nicht nur als Gussbauteil, sondern durch miteinander montierte umgeformte, insbesondere gebogene oder/und tiefgezogene Blechteile zu bilden. Dies führt zu einer kostengünstigeren Herstellung des erfindungsgemäßen Fangmauls als wenn es, wie bisher üblich, als Gussbauteil hergestellt würde.

Darüber hinaus kann der dämpfende Abschnitt des Fangmauls, also die Prallbauteilgruppe, im Schadensfalle oder nach Ende ihrer Lebensdauer durch eine intakte neue Prallbauteilgruppe ersetzt werden. Dadurch kann die Lebensdauer des Fangmauls insgesamt deutlich erhöht werden.

Um die Verformbarkeit des elastomeren Federbauteils unter Last gezielt einstellen zu können, kann vorgesehen sein, dass das Elastomerbauteil als das Federbauteil mit wenigstens einer der angrenzenden Flächen von Prallbauteil oder/und Einfahr-Unterstützungswandabschnitt wenigstens einen Hohlraum einschließt. Alternativ oder zusätzlich kann das Elastomer-Federbauteil in sich wenigstens einen Hohlraum aufweisen. Im Falle der Verformung kann sich das elastomere Federbauteil dann in die vorgesehenen Hohlräume hinein verformen.

Die vorliegende Erfindung wird nachfolgend anhand der beiliegenden

### Figuren näher beschrieben werden. Es stellt dar:

- Figuren 1a-c:: ein herkömmliches Fangmaul in Vorderansicht (Fig. 1a), Draufsicht (Fig. 1 b) und Längsschnittansicht (Fig. 1 c)
- Figur 2:: eine Längsschnittansicht einer ersten Ausführungsform eines erfindungsgemäßen Fangmauls mit bezüglich der Fig. 1c um 90° verdrehter Schnittebene,
- Figur 3:: eine perspektivische Schrägansicht von vorne oben einer zweiten Ausführungsform eines erfindungsgemäßen Fangmauls,
- Figur 4:: eine perspektivische Schrägansicht von hinten oben des Fangmauls der zweiten Ausführungsform von Fig. 3,
- Figur 5:: eine Draufsicht einer dritten Ausführungsform eines erfindungsgemäßen Fangmauls,
- Figur 6:: das Fangmaul der dritten Ausführungsform von Fig. 5 von schräg hinten betrachtet,
- Figur 7:: eine Draufsicht der Prallbauteilgruppe, wie sie am Fangmaul der dritten Ausführungsform der Figuren 5 und 6 verwendet wird.

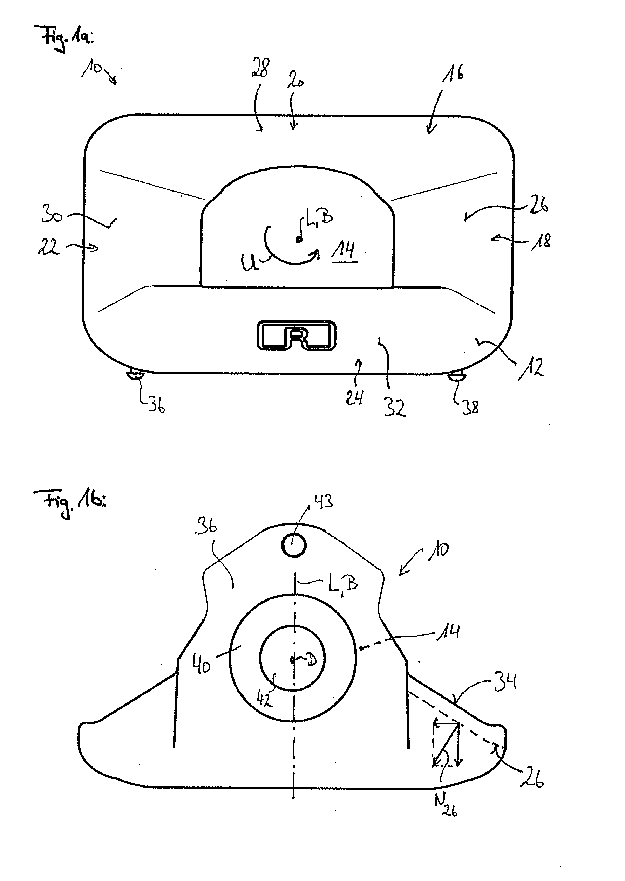

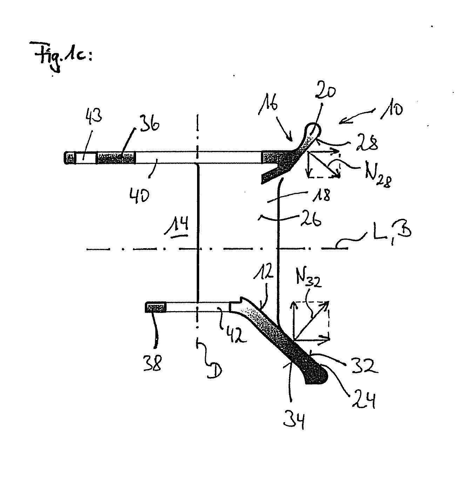

In Figur 1 a ist ein herkömmliches Fangmaul des Standes der Technik allgemein mit 10 bezeichnet und in der Vorderansicht dargestellt.

Wäre das Fangmaul 10 der Figur 1a an einem Lastkraftwagen angeordnet, etwa wie üblich am Heck eines Lastkraftwagens in der Quermitte, dann blickt der Betrachter der Figur 1 a längs der mit der Fahrzeuglängsachse L zusammenfallenden Bezugsachse B zum Fahrzeug hin auf die Kupplungsseite 12 des Fangmauls 10.

Das Fangmaul 10 weist einen im Wesentlichen zentrischen, durch eine Öffnung gebildeten Kupplungsteil-Aufnahmebereich 14 und einen diesen bezogen auf die Bezugsachse B radial außen umgebenden Kupplungsteil-Einfahrbereich 16 auf.

Das Fangmaul 10 ist üblicherweise zusammen mit einem Kupplungsgehäuse an einem Fahrzeug aus Zugfahrzeug und Nachlauffahrzeug angeordnet, vorzugsweise am Zugfahrzeug. Dabei liegt der Kupplungsteil-Aufnahmeabschnitt 14 des Fangmauls 10 in Überdeckung mit einer Öffnung eines Kupplungsteil-Aufnahmeraums eines in den Figuren 1a bis 1c nicht dargestellten, mit dem Fangmaul 10 zusammenwirkenden Kupplungsgehäuses. Das Fangmaul 10 dient mit seinem Kupplungsteil-Einfahrbereich 16 als Einführhilfe zum Einführen eines Kupplungsabschnitts eines mit dem jeweils anderen Fahrzeug aus Zugfahrzeug und Nachlauffahrzeug verbundenen Kupplungsteils, etwa einer Zugöse einer Deichsel, durch den Kupplungsteil-Aufnahmebereich 14 hindurch in den dahinter liegenden Kupplungsteil-Aufnahmeraum des Kupplungsgehäuses. Dort wird der Kupplungsabschnitt des Kupplungsteils in der Regel formschlüssig, etwa durch Kupplungsbolzen oder Kupplungshaken, an die Kupplung und das damit verbundene eine Fahrzeug angekuppelt.

Dann also, wenn das Kupplungsteil ordnungsgemäß an die Fahrzeugkupplung angekuppelt ist, befindet sich ein Abschnitt des Kupplungsteils im Kupplungsteil-Aufnahmeabschnitt 14 des Fangmauls 10. Genauer durchsetzt das Kupplungsteil diesen.

Um seine Aufgabe als Einführhilfe erfüllen zu können, weist der Kupplungsteil-Einfahrbereich 16 des Fangmauls 10 in dem in Fig. 1 dargestellten Beispiel vier im Wesentlichen starre, weil aus Metall hergestellte Einfahr-Unterstützungswandabschnitte auf. Genauer sind dies ein rechter Einfahr-Unterstützungswandabschnitt 18, ein oberer Einfahr-Unterstützungswandabschnitt 20, ein dem rechten bezüglich der Bezugsachse B gegenüberliegender linker Einfahr-Unterstützungswandabschnitt 22 und ein dem oberen bezüglich der Bezugsachse B gegenüberliegender unterer Einfahr-Unterstützungswandabschnitt 24. Diese Einfahr-Unterstützungswandabschnitte sind in Umfangsrichtung U um die Bezugsachse herum benachbart.

An jedem dieser Einfahr-Unterstützungswandabschnitte ist eine zur Berührung mit einem anzukuppelnden Kupplungsabschnitt eines Kupplungsteils ausgebildete Einfahr-Unterstützungsfläche ausgebildet: der rechte Einfahr-Unterstützungswandabschnitt 18 weist auf seiner Kupplungsseite 12 eine rechte Einfahr-Unterstützungsfläche 26 auf, der obere Einfahr-Unterstützungswandabschnitt 20 eine obere Einfahr-Unterstützungsfläche 28, der linke Einfahr-Unterstützungswandabschnitt 22 eine linke Einfahr-Unterstützungsfläche 30 und der untere Einfahr-Unterstützungswandabschnitt 24 eine untere Einfahr-Unterstützungsfläche 32.

Jeder dieser Einfahr-Unterstützungswandabschnitte ist derart ausgelegt, dass ein sich dem Fangmaul 10 auf dessen Kupplungsseite 12 im Bereich des Kupplungsteil-Einfahrbereichs parallel zur Bezugsachse B annähernder Kupplungsabschnitt, der auf eine der Einfahr-Unterstützungsflächen auftrifft, zum Kupplungsteil-Aufnahmebereich 14 hin abgelenkt wird.

Hierzu sind die einzelnen Einfahr-Unterstützungsflächen 26, 28, 30 und 32, wie in den Figuren 1b und 1c gezeigt ist, derart geneigt, dass ihr Normalenvektor Nₓ (x = 26, 28, 30, 32) jeweils eine von der Kupplungsseite 12 des Fangmauls 10 wegweisende, in Richtung der Bezugsachse B verlaufende axiale erste Komponente und eine zur Bezugsachse B hinweisende, zur ersten orthogonale zweite Komponente aufweist. Die zweite Komponente muss zur Erfüllung dieses Kriteriums grob in die Richtung der Bezugsachse B weisen und braucht diese nicht exakt zu schneiden.

Selbst wenn die Einfahr-Unterstützungsflächen gekrümmt oder mit unterschiedlichen Neigungen (siehe etwa die obere Einfahr-Unterstützungsfläche 28 in Figur 1 c) ausgebildet sein sollten, weist der Normalenvektor der betreffenden Einfahr-Unterstützungsfläche in unterschiedlichen Abschnitten stets dennoch die in die bezeichneten Richtungen weisenden Komponenten auf.

In Fig. 1a sind am unteren Rand des Fangmauls 10 die auf der Montageseite 34 (siehe Fig. 1 c) des Fangmauls 10 angeordneten Einhängezapfen 36 und 38 zu erkennen, welche als Federwiderlager für nicht dargestellte Zentrierfedern dienen, mit welchen das Fangmaul 10 am ebenfalls nicht dargestellten Kupplungsgehäuse in eine Mittelstellung vorgespannt ist.

In Fig. 1b blickt man auf die obere Lagerscheibe 36 des Fangmauls 10, unter dessen Beteiligung das Fangmaul 10 am Gehäuse einer nicht dargestellten Kupplung lagerbar ist.

Figur 1c zeigt zusätzlich die zur oberen Lagerscheibe 36 im Wesentlichen parallele untere Lagerscheibe 38, welche ebenfalls zur Lagerung des Fangmauls 10 an einem Kupplungsgehäuse beiträgt.

Die obere Lagerscheibe 36 weist eine obere Lageröffnung 40 auf und die untere Lagerscheibe 38 weist eine untere Lageröffnung 42 auf. Die obere und die untere Lageröffnung 40 bzw. 42 sind koaxial bezüglich einer zur Bezugsachse B orthogonalen Drehachse D, um welche das Fangmaul 10 relativ zum Kupplungsgehäuse, an dem das Fangmaul 10 angebracht ist, verdrehbar lagerbar ist.

Üblicherweise fällt die Drehachse D mit der Mittelachse eines relativ zum Fangmaul 10 beweglichen Kupplungsbolzens zusammen.

In Fig. 1b und 1c ist außerdem in der oberen Lagerscheibe 36 ein kleines Loch 43 dargestellt, in welches ein nicht dargestellter Arretierbolzen dann formschlüssig eingreift, wenn sich das Fangmaul während eines Rangiervorgangs in der vorgespannten Mittelstellung befindet. Dadurch soll sichergestellt werden, dass die Einfahr-Unterstützungsflächen beim Rangieren Kraft auf ein außerhalb des Kupplungsteil-Aufnahmebereichs 14 auftreffendes Kupplungsteil ausüben können, um dieses zum Kupplungsteil-Aufnahmeabschnitt 14 hin zu lenken.

Während eines normalen Zugbetriebs ist der Arretierbolzen aus der Öffnung 43 ausgerückt, um bei Rangieren mit dem Zug oder bei einem Abbiegen mit sehr engem Kurvenradius ein Ausweichen des Fangmauls 10 zu ermöglichen und dadurch eine Beschädigung des Fangmauls 10 durch ein sehr stark schräg stehendes Kupplungsteil zu vermeiden.

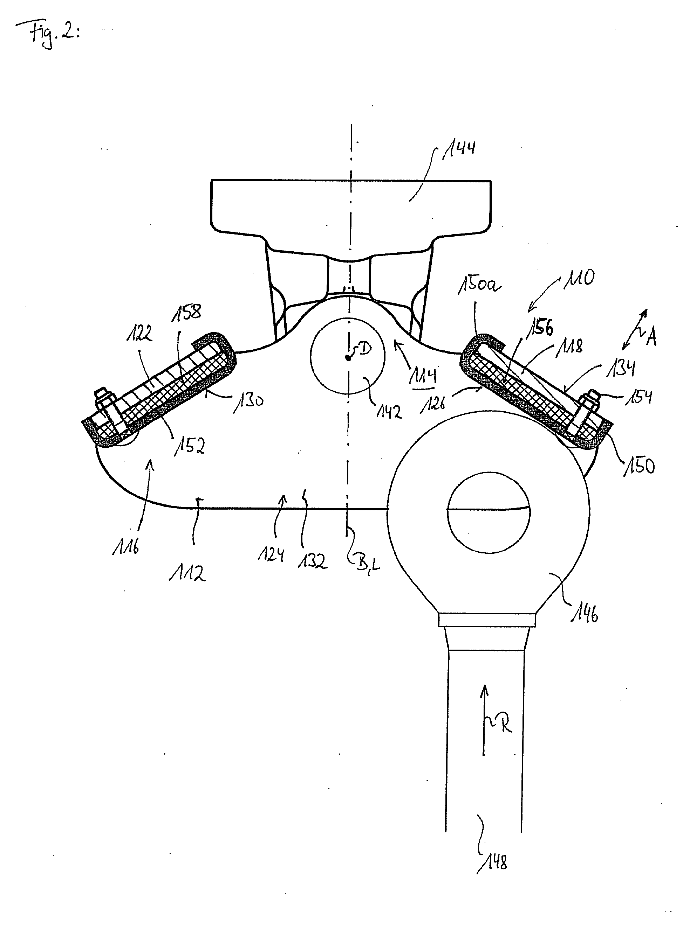

In Fig. 2 ist eine erste Ausführungsform eines erfindungsgemäßen Fangmauls dargestellt. Gleiche bzw. funktionsgleiche Bauteile bzw. Bauteilabschnitte wie in den Figuren 1a bis 1c sind in Figur 2 mit gleichen Bezugszeichen versehen, jedoch erhöht um die Zahl 100. Die erste erfindungsgemäße Ausführungsform der Figur 2 wird nur insofern erläutert, als es sich von dem herkömmlichen Fangmaul der Figuren 1a bis 1c unterscheidet, auf dessen Beschreibung ansonsten ausdrücklich verwiesen wird.

In Figur 2 ist zusätzlich zum Fangmaul 110 ein Teil eines Kupplungsgehäuses 144 dargestellt, an welchem das Fangmaul 110 in einem Winkelbereich um die Drehachse D relativ verdrehbar angeordnet ist.

Weiter ist eine Zugöse 146 als ein Kupplungsabschnitt eines Kupplungsteils 148 dargestellt, welches sich zum Ankuppeln parallel zur Bezugsachse B längs des Pfeils R im Kupplungsteil-Einfahrbereich 116, also außerhalb des Kupplungsteil-Aufnahmebereichs 114, dem Fangmaul 110 annähert. Die Zugöse 146 trifft dabei auf die rechte Einfahr-Unterstützungsfläche 126.

Diese Einfahr-Unterstützungsfläche 126 ist nicht mehr, wie im Stand der Technik, unmittelbar am Einfahr-Unterstützungsfläche 118 des Fangmauls 110, sondern an einem gesondert von diesem vorgesehenen Prallbauteil 150 ausgebildet.

Ebenso ist die linke Einfahr-Unterstützungsfläche 130 an einem gesonderten linken Prallbauteil 152 ausgebildet.

Die Prallbauteile 150 und 152 sind bezogen auf eine die Bezugsachse B enthaltende, zur Zeichenebene von Fig. 2 orthogonale Symmetrieebene spiegelsymmetrisch, so dass im Folgenden stellvertretend lediglich das Prallbauteil 150 beschrieben werden wird, dessen Beschreibung jedoch unter Berücksichtigung der Symmetrie auch auf das Prallbauteil 152 anwendbar ist.

Das Prallbauteil 150 ist als gebogenes Metallblechbauteil ausgeführt, welches mit einem Hintergriffsabschnitt 150a an seinem dem Kupplungsteil-Aufnahmeabschnitt 114 näheren Querende den ihm zugeordneten Einfahr-Unterstützungswandabschnitt 118, an welchem es angebracht ist, zur Montageseite 134 hin hintergreift.

Weiterhin ist das Prallbauteil 150 mittels wenigstens einer den Einfahr-Unterstützungswandabschnitt 118 durchsetzenden Schraube 154 am zugeordneten Einfahr-Unterstützungswandabschnitt 118 gehalten und im Falle einer Annäherungsbewegung an den Einfahr-Unterstützungswandabschnitt 118 in einer zur Einfahr-Unterstützungsfläche 126 orthogonalen Längsrichtung A der Schraube 154 geführt.

Zwischen dem Prallbauteil 150 und dem Einfahr-Unterstützungswandabschnitt 118 ist ein elastomeres Federbauteil 156 vorgesehen, welches vom Prallbauteil 150 an drei Seiten umgeben ist.

Eine vierte Seite des elastomeren Federbauteils 156 ist durch den Einfahr-Unterstützungswandabschnitt 118 abgedeckt. Die beiden verbleibenden, zur Zeichenebene der Figur 2 im Wesentlichen parallelen Seitenflächen des elastomeren Federbauteils 156, welche in Fig. 2 nicht zu erkennen sind, sind durch Abschnitte des benachbarten oberen bzw. des benachbarten unteren Einfahr-Unterstützungswandabschnitts 120 bzw. 124 bedeckt, so dass das elastomere Federbauteil 156 im Wesentlichen vollständig gekapselt ist. Dadurch ist seine Verformungssteifigkeit im Vergleich zum ungekapselten Zustand wesentlich erhöht.

Bei der relativen Annäherung der Zugöse 146 an den Bereich des rechten oder linken Unterstützungswandabschnitts 118 bzw. 122 während eines Rangiervorgangs trifft, wie in dem in Fig. 2 gezeigten Fall, die Zugöse 146 auf ein Prallbauteil (hier: rechtes Prallbauteil 150) auf, wobei es abhängig von der Höhe der Aufpralllast zu einer Annäherung des Prallbauteils 150 und damit der Einfahr-Unterstützungsfläche 126 an den zugeordneten Einfahr-Unterstützungswandabschnitt 118 kommt, wobei das zwischen dem Prallbauteil 150 und dem Einfahr-Unterstützungswandabschnitt 118 angeordnete elastomere Federbauteil 156 unter Einwirkung der Aufpralllast verformt wird. Dadurch wird die maximal auf den Einfahr-Unterstützungswandabschnitt 118 aus dem Aufprall einwirkende Kraft erheblich reduziert, was das Risiko einer Beschädigung des Fangmauls 110 oder/und eines mit diesem zusammenwirkenden Bauteils, wie dem zuvor erwähnten Arretierbolzen und dessen Führungs- oder/und Mobilisierungseinrichtung, erheblich reduziert.

In dem in Fig. 2 dargestellten Fall kann das Prallbauteil und gegebenenfalls auch das elastomere Federbauteil bei Bedarf ausgetauscht werden. Hierzu muss lediglich die Schraube 154 gelöst werden. Hierzu ist vorteilhafterweise das elastomere Federbauteil 156 an die im montierten Zustand zum Einfahr-Unterstützungswandabschnitt 118 hinweisende Innenseite des Prallbauteils 150 anvulkanisiert.

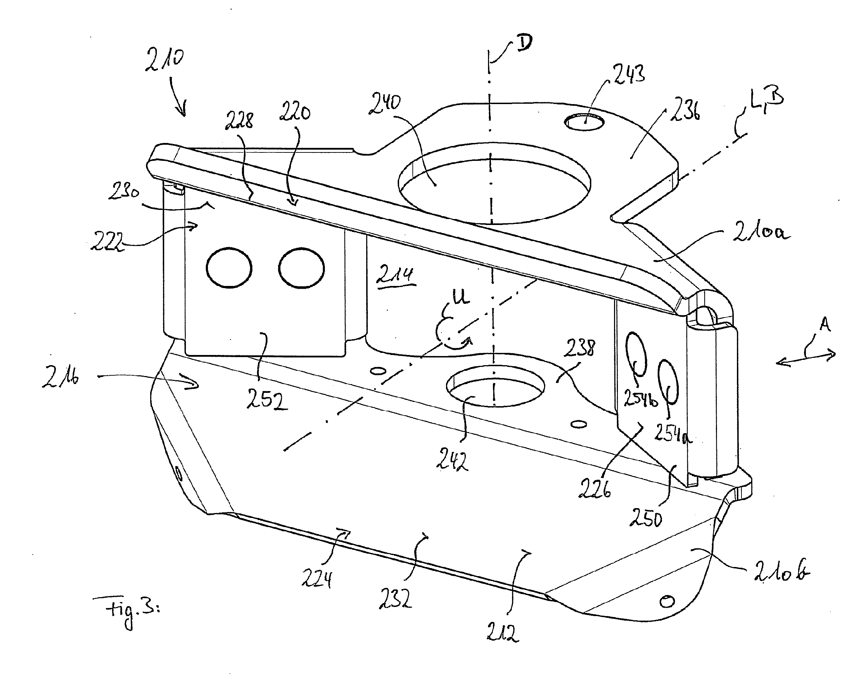

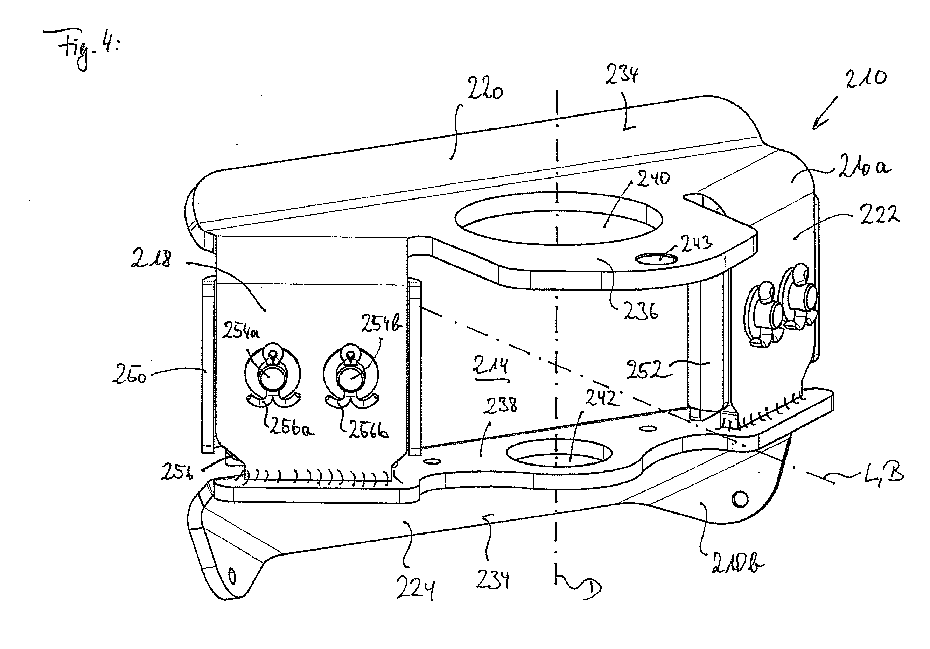

In den Figuren 3 und 4 ist eine zweite Ausführungsform eines erfindungsgemäßen Fangmauls perspektivisch dargestellt. Diese zweite Ausführungsform wird nur insofern beschrieben werden, als sie sich von der in Fig. 2 dargestellten ersten Ausführungsform unterscheidet. Gleiche oder funktionsgleiche Bauteile bzw. Bauteilabschnitte wie in der ersten Ausführungsform sind in der zweiten Ausführungsform der Figuren 3 und 4 mit gleichen Bezugszeichen versehen, jedoch erhöht um die Zahl 100. Die zweite Ausführungsform wird im Folgenden nur insofern beschrieben werden, als sie sich von der ersten Ausführungsform unterschiedet, auf deren Beschreibung ansonsten ausdrücklich verwiesen wird.

Die in den Figuren 3 und 4 dargestellte zweite Ausführungsform eines erfindungsgemäßen Fangmauls 210 ist in ihrem Grundgerüst aus zwei Fangmaulteilen 210a und 210b gebildet. Die beiden Fangmaulteile 210a und 210b sind aus ausgestanzten oder ausgeschnittenen und gebogenen oder tiefgezogenen Blechteilen gefertigt.

Das erste Fangmaulteil 210a umfasst den rechten und den linken Einfahr-Unterstützungswandabschnitt 218 bzw. 222 sowie den diese beiden Wandabschnitte verbindenden oberen Einfahr-Unterstützungswandabschnitt 220 mit der daran ausgebildeten oberen Lagerscheibe 236.

Die Lagerscheibe 236 sowie die drei Einfahr-Unterstützungswandabschnitte 218, 220 und 222 sind einstückig an einem gemeinsamen Blechteil ausgebildet.

Das zweite Fangmaulteil 210b umfasst den unteren Einfahr-Unterstützungswandabschnitt 224 sowie die untere Lagerscheibe 238, welche ebenfalls einstückig an ein- und demselben Blechteil ausgebildet sind.

In dem in den Figuren 3 und 4 dargestellten Beispiel sind das erste und das zweite Fangmaulteil 210a bzw. 210b durch Verschweißen der Längsenden des rechten und des linken Einfahr-Unterstützungswandabschnitts 218 bzw. 222 mit dem Fangmaulteil 210b fest verbunden.

In den Figuren 3 und 4 ist zu erkennen, wie die elastomeren Federbauteile (in Fig. 4 ist ein kleiner Teil des Federbauteils 256 zu erkennen) durch Prallbauteile 250 und 252 an drei Seiten, durch die Einfahr-Unterstützungswandabschnitte 218 und 22 an der Rückseite, sowie oben und unten durch Abschnitte des oberen Federbauteils 210a und des unteren Federbauteils 210b im Wesentlichen vollständig eingekapselt sind.

Im Gegensatz zur ersten Ausführungsform hintergreifen die Prallbauteile 250 und 252 die ihnen zugeordneten Einfahr-Unterstützungswandabschnitte 218 und 222 nicht, sondern umgreifen diese lediglich seitlich.

Das im Wesentlichen identisch zum Prallbauteil 252 ausgebildete Prallbauteil 250 ist von zwei Bolzen 254a und 254b, welche in eine Ausnehmung in der Einfahr-Unterstützungsfläche 226 bzw. 230 eingesenkt sind, an dem ihm zugeordneten Einfahr-Unterstützungswandabschnitt 218 unverlierbar gehalten.

Die Bolzen 254a und 254b, die überdies das Prallbauteil 250 in der zur Einfahr-Unterstützungsfläche 226 im Wesentlichen orthogonalen Richtung A im Falle einer Annäherungsbewegung des Prallbauteils 250 an den zugeordneten Einfach-Unterstützungswandabschnitt 218 führen, durchsetzen hierzu den Einfahr-Unterstützungswandabschnitt 218 zur Montageseite 234 hin und sind dort durch zwei verformte Splinte 256a und 256b unverlierbar gehalten.

Wiederum sind die jeweils von den Prallbauteilen 250 und 252 sowie von den Fangmaulteilen 210a und 210b im Wesentlichen vollständig umschlossenen elastomeren Federbauteile mit den ihnen zugeordneten Prallbauteilen 250 bzw. 252 verbunden, besonders bevorzugt durch Anvulkanisieren, so dass die Prallbauteile 250 und 252 zusammen mit den Federbauteilen vormontierte Baugruppen bilden, welche einfach und schnell an einem Einfahr-Unterstützungswandabschnitt durch die gezeigten 254a und 254b anbringbar sind. Dadurch können beispielsweise verschlissene Prallbauteile besonders schnell ausgetauscht werden.

Vorzugsweise sind die Prallbauteile 250 und 252 bezogen zu einer in den Richtungen A und D verlaufenden Längsmittelebene symmetrisch ausgebildet, so dass eine Fehlmontage der Prallbauteile, etwa am falschen Einfahr-Unterstützungswandabschnitt, ausgeschlossen ist. Jedes Prallbauteil ist an jedem aus rechtem und linken Einfahr-Unterstützungswandabschnitt 218 bzw. 222 anbringbar.

Die identischen Bolzen 254a und 254b weisen vorzugsweise einen Kegelsenkkopf auf, so dass sie zur Bildung einer im Wesentlichen ebenen Einfahr-Unterstützungsfläche 226 beitragen können.

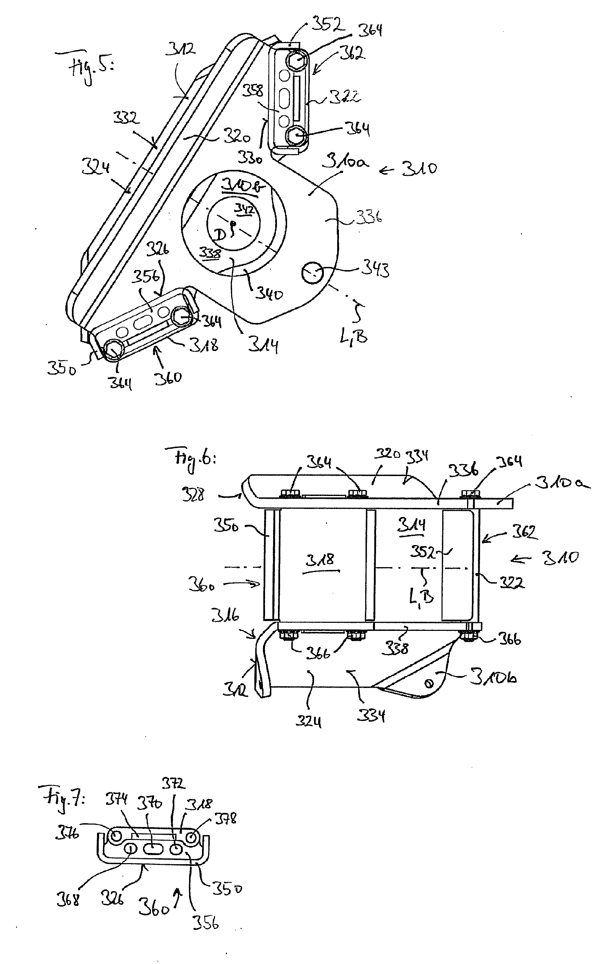

In den Figuren 5 und 6 ist eine dritte Ausführungsform eines erfindungsgemäßen Fangmauls dargestellt. Gleiche bzw. funktionsgleiche Bauteile bzw. Bauteilabschnitte wie in der ersten und der zweiten Ausführungsform eines erfindungsgemäßen Fangmauls sind in der dritten Ausführungsform der Figuren 5 und 6 mit gleichen Bezugszeichen versehen, jedoch erhöht um die Zahl 200 bzw. 100.

Die dritte Ausführungsform wird nur insofern beschrieben werden, als sie sich von den vorhergehenden Ausführungsformen unterschiedet, auf deren Beschreibung ansonsten ausdrücklich verwiesen wird.

In der dritten Ausführungsform sind die Prallbauteile 350 bzw. 352, die von ihnen umfassten elastomeren Federbauteile 356 bzw. 358 und die Einfahr-Unterstützungswandabschnitte 318 bzw. 322 jeweils zu einer

Prallbauteilgruppe 360 bzw. 362 verbunden.

Die im Wesentlichen identischen Prallbauteilgruppen 360 und 362 sind durch die Federbauteile 356 bzw. 358 zusammengehalten, welche sowohl mit den beteiligten Prallbauteilen 350 bzw. 352 als auch mit den beteiligten Einfahr-Unterstützungswandabschnitten 318 bzw. 322 verbunden sind, besonders bevorzugt durch Anvulkanisieren verbunden sind. Die Prallbauteilgruppen 360 und 362 sind somit vormontierte bzw. vorgefertigte Baueinheiten.

Die Fangmaulteile 310a und 310b umfassen dabei nur noch im Falle des oberen Fangmaulteils 310a den oberen Einfahr-Unterstützungswandabschnitt 320 und die obere Lagerscheibe 336 sowie im Falle des unteren Fangmaulteils den unteren Einfahr-Unterstützungswandabschnitt 324 und die untere Lagerscheibe 338.

Wie weiter unten noch näher ausgeführt werden wird, sind in den Einfahr-Unterstützungswandabschnitten 318 und 322 Durchgangslöcher vorgesehen, welche im montierten Zustand des Fangmauls 310 von Schrauben 364 durchsetzt sind.

Die Schraubenköpfe der Schrauben 364 liegen auf der Montageseite 334 des oberen Fangmaulteils 310a an, durchsetzen das obere Fangmaulteil 310a, die Prallbauteilgruppen 360 bzw. 362 und das untere Fangmaulteil 310b, so dass sie auf der Montageseite 334 des unteren Fangmaulteils 310b austreten, wo sie mit Muttern 366 festgelegt sind.

Dadurch wird ein montiertes Fangmaul 310 erhalten, welches in wenigstens vier Teile 310a, 310b, 360 und 362 zerlegbar ist.

In der Draufsicht von Fig. 5 ist das obere Fangmaulteil 310a in den Bereichen, in welchen die Prallbauteilgruppen 360 und 362 anmontiert sind, transparent dargestellt, um den inneren Aufbau der Prallbauteilgruppen 360 und 362 zu zeigen.

In Fig. 7 ist der innere Aufbau der Prallbauteilgruppen anhand des Prallbauteils 360 dargestellt.

Die Ansicht des Prallbauteils 360, welches identisch mit dem Prallbauteil 362 ist, entspricht jener von Fig. 5, d.h. die Blickrichtung verläuft parallel zur Achse D.

Gut zu erkennen ist das an die beiden Metallteile: Prallbauteil 350 und Einfahr-Unterstützungswandabschnitt 318, anvulkanisierte elastomere Federbauteil 356, welches in einer Richtung orthogonal zur Zeichenebene der Figur 7 von drei Hohlräumen 368, 370 und 372 durchsetzt ist.

Diese Hohlräume 370 und 372 dienen als Verformungsräume, in welche hinein sich das elastomere Federbauteil 356 im Falle einer lastbedingten Annäherung metallischen Prallbauteils 350 an den Einfahr-Unterstützungswandabschnitt 318 verformen kann.

Zum selben Zweck ist an dem Einfahr-Unterstützungswandabschnitt 318 eine zum Federbauteil 356 hin offene Ausnehmung 374 vorgesehen.

Außerdem sind in Fig. 7 die Durchgangslöcher 376 und 378 im Einfahr-Unterstützungswandabschnitt zu erkennen, welche im montierten Zustand der Figuren 5 und 6 von den Schrauben 364 durchsetzt sind.

## Patentansprüche

1. Fangmaul für eine zur Ankupplung eines Nachlauffahrzeugs an ein Zugfahrzeug ausgebildete Kraftfahrzeugkupplung (144), in einem an ein Fahrzeug aus Zugfahrzeug und Nachlauffahrzeug montierten Zustand betrachtet, mit einer Montageseite (134; 234; 334), welche zu dem das Fangmaul (110; 210; 310) tragenden Fahrzeug hin weist, und mit einer der Montageseite (134; 234; 334) entgegengesetzten Kupplungsseite (112; 212; 312), welche von dem das Fangmaul (110; 210; 310) tragenden Fahrzeug weg weist, wobei das Fangmaul (110; 210; 310) einen Kupplungsteil-Aufnahmebereich (114; 214; 314) umfasst, in welchem dann, wenn ein an das jeweils andere Fahrzeug aus Nachlauffahrzeug und Zugfahrzeug montiertes Kupplungsteil (148) mit seinem Kupplungsabschnitt (146) lösbar an die Kraftfahrzeugkupplung (144) angekuppelt ist, ein Abschnitt des Kupplungsteils (148) aufgenommen ist, und wobei das Fangmaul (110; 210; 310) einen außerhalb des Kupplungsteil-Aufnahmebereichs (114; 214; 314) gelegenen Kupplungsteil-Einfahrbereich (116; 216; 316) aufweist, welcher dazu vorgesehen ist, Kupplungsabschnitte (146) von Kupplungsteilen (148), welche sich dem Fangmaul (110; 210; 310) außerhalb des Kupplungsteil-Aufnahmebereichs (114; 214; 314) auf der Kupplungsseite (112; 212; 312) annähern, zum Kupplungsteil-Aufnahmebereich (114; 214; 314) hin zu lenken, wobei das Fangmaul (110; 210; 310) hierzu wenigstens einen im Kupplungsteil-Einfahrbereich (116; 216; 316) vorgesehenen, im Wesentlichen starren Einfahr-Unterstützungswandabschnitt (118, 120; 122, 124; 218, 220, 222, 224; 318, 320, 322, 324) mit einer Einfahr-Unterstützungsfläche (126, 128, 130, 132; 226, 228, 230, 232; 326, 328, 330, 332) auf der Kupplungsseite aufweist, welche bezogen auf eine den Kupplungsteil-Aufnahmebereich (114; 214; 314) durchsetzende und in Fahrzeuglängsrichtung (L) verlaufende Bezugsachse (B) derart geneigt ist, dass ein Normalenvektor der Einfahr-Unterstützungsfläche (126, 128, 130, 132; 226, 228, 230, 232; 326, 328, 330, 332) eine von dem das Fangmaul (110; 210; 310) tragenden Fahrzeug weg weisende, in Richtung der Bezugsachse (B) verlaufende axiale erste Komponente und eine zur Bezugsachse (B) hinweisende, zur ersten orthogonale zweite Komponente aufweist,
**dadurch gekennzeichnet, dass** die Einfahr-Unterstützungsfläche (126, 130; 226, 230; 326, 330) unter Zwischenanordnung eines Federbauteils (156, 158; 356, 358) mit Abstand von dem Einfahr-Unterstützungswandabschnitt (118, 122; 218, 222; 318, 322) derart angeordnet ist, dass die Einfahr-Unterstützungsfläche (126, 130; 226, 230; 326, 330) unter Krafteinwirkung an der Kupplungsseite (112; 212; 312) mit einer in Richtung (A) auf den Einfahr-Unterstützungswandabschnitt (118, 122; 218, 222; 318, 322) zu wirkenden Kraft gegen eine Verformung des Federbauteils (156, 158; 356, 358) zumindest abschnittsweise elastisch auf den Einfahr-Unterstützungswandabschnitt (118, 122; 218, 222; 318, 322) zu verlagerbar ist.

2. Fangmaul nach Anspruch 1,
**dadurch gekennzeichnet, dass** die Einfahr-Unterstützungsfläche (126, 128; 226, 228) an einem im Vergleich zum Federbauteil (156, 158; 256; 356, 358) im Wesentlichen starren Prallbauteil (150, 152; 250, 252; 350, 352) ausgebildet ist, welches gesondert von dem Einfahr-Unterstützungswandabschnitt (118, 122; 218, 222; 318, 322) ausgebildet und relativ zu diesem unter Veränderung des Abstands zwischen Einfahr-Unterstützungsfläche (126, 128; 226, 228) und Einfahr-Unterstützungswandabschnitt (118, 122; 218, 222; 318, 322) beweglich am Einfahr-Unterstützungswandabschnitt (118, 122; 218, 222; 318, 322) vorgesehen ist.

3. Fangmaul nach Anspruch 2,
**dadurch gekennzeichnet, dass** Führungsmittel (154; 254a, 254b) vorgesehen sind, welche das Prallbauteil (150, 152; 250, 252) in seiner den Abstand zwischen Einfahr-Unterstützungswandabschnitt (118, 122; 218, 222; 318, 322) und Einfahr-Unterstützungsfläche (126, 128; 226, 228) verändernden Relativbewegung führen.

4. Fangmaul nach Anspruch 3,
**dadurch gekennzeichnet, dass** die Führungsmittel (154; 254a, 254b) den Einfahr-Unterstützungswandabschnitt (118; 218) auf der Montageseite (134; 234) hintergreifend durchsetzen.

5. Fangmaul nach einem der Ansprüche 2 bis 4,
**dadurch gekennzeichnet, dass** das Prallbauteil (150, 152) einen, vorzugsweise einstückig mit dem Prallbauteil (150, 152) ausgebildeten, Hintergriffsabschnitt (150a) aufweist, mit welchem das Prallbauteil (150, 152) den Einfahr-Unterstützungswandabschnitt (118; 218) auf der Montageseite (134) hintergreift.

6. Fangmaul nach Anspruch 5, unter Einbeziehung des Anspruchs 4, **dadurch gekennzeichnet, dass** der Hintergriffsabschnitt als das Führungsmittel den Einfahr-Unterstützungswandabschnitt durchsetzt.

7. Fangmaul nach einem der Ansprüche 2 bis 6,
**dadurch gekennzeichnet, dass** das Federbauteil (156, 158; 256; 356, 358) an zwei, vorzugsweise an drei Seiten vom Prallbauteil (150, 152; 250, 252; 350, 352) umgeben ist.

8. Fangmaul nach Anspruch 7,
**dadurch gekennzeichnet, dass** das Federbauteil (156, 158; 256; 356, 358) im Wesentlichen vollständig gekapselt ist.

9. Fangmaul nach einem der vorhergehenden Ansprüche,
**dadurch gekennzeichnet, dass** das Fangmaul (110; 210; 310) eine Mehrzahl von in Umfangsrichtung (U) um den Kupplungsteil-Aufnahmebereich (114; 214; 314) aufeinander folgenden Einfahr-Unterstützungswandabschnitten (118, 122; 218, 222; 318, 322) aufweist.

10. Fangmaul nach Anspruch 9,
**dadurch gekennzeichnet, dass** an wenigstens zwei bezüglich der Bezugsachse (B) gegenüberliegenden Einfahr-Unterstützungswandabschnitten (118 und 122, 120 und 124; 218 und 222, 220 und 224; 318 und 322, 320 und 324), vorzugsweise an in einem an ein Fahrzeug montierten Zustand des Fangmauls (110; 210; 310) im Wesentlichen horizontal gegenüberliegenden Einfahr-Unterstützungswandabschnitten (118 und 122; 218 und 222; 318 und 322), jeweils eine Einfahr-Unterstützungsfläche (126 und 130; 226 und 230; 326 und 330) unter Zwischenanordnung eines Federbauteils (156, 158; 256; 356, 358) mit Abstand von dem jeweiligen Einfahr-Unterstützungswandabschnitt (118 und 122; 218 und 222; 318 und 322) angeordnet und elastisch auf den zugeordneten Einfahr-Unterstützungswandabschnitt (118 und 122; 218 und 222; 318 und 322) zu verlagerbar ist:

11. Fangmaul nach einem der vorhergehenden Ansprüche,
**dadurch gekennzeichnet, dass** das Federbauteil (156, 158; 256; 356, 358) ein Elastomerbauteil umfasst, welches vorzugsweise mit dem Einfahr-Unterstützungswandabschnitt (356, 358) verbunden, besonders bevorzugt an diesen anvulkanisiert ist.

12. Fangmaul nach einem der vorhergehenden Ansprüche, unter Einbeziehung des Anspruchs 2,
**dadurch gekennzeichnet, dass** das Federbauteil (156, 158; 256; 356, 358) ein Elastomerbauteil umfasst, welches vorzugsweise mit dem Prallbauteil (150, 152; 250, 252; 350, 352) verbunden, besonders bevorzugt an dieses anvulkanisiert ist.

13. Fangmaul nach Anspruch 11 und 12,
**dadurch gekennzeichnet, dass** es eine vormontierte Prallbauteilgruppe (360, 362) aufweist, welche das im Wesentlichen starre Prallbauteil (350, 352), eine im Wesentlichen starre Rückwand (318, 322) und ein zwischen diesen angeordnetes Elastomer-Federbauteil (356, 358) umfasst, wobei die Rückwand (318, 322) mit in Umfangsrichtung (U) um den Kupplungsteil-Aufnahmebereich (314) benachbarten Einfahr-Unterstützungswandabschnitten (320, 324), vorzugsweise lösbar, verbunden ist und den dem Prallbauteil (350, 352) zugeordneten Einfahr-Unterstützungswandabschnitt (318, 322) bildet.

14. Fangmaul nach einem der Ansprüche 11 bis 13,
**dadurch gekennzeichnet, dass** das Elastomerbauteil (156, 158; 256; 356, 358) als das Federbauteil (156, 158; 256; 356, 358) mit wenigstens einer der angrenzenden Flächen von Prallbauteil (150, 152; 250, 252; 350, 352) oder/und Einfahr-Unterstützungswandabschnitt (118, 122; 218, 222; 318, 322) wenigstens einen Hohlraum (374) einschließt oder/und in sich wenigstens einen Hohlraum (368, 370, 372) aufweist.
